# EUROPEAN PATENT SPECIFICATION

(11) **EP 0 384 074 B1**
(45) Date of publication and mention of the grant of the patent: **08.09.1993**
(21) Application number: 89312539.3
(22) Date of filing: 01.12.1989
(51) Int. Cl.: G02B 23/18, G02B 23/00

(54) **Fixed focus binocular**
Doppelfernrohr mit fester Brennweite
Jumelle binoculaire avec foyer fixe

(30) Priority: 21.12.1988 JP 322956/88
(43) Date of publication of application: 29.08.1990
(73) Proprietor: Nakamura, Masakazu, Itabashi-ku Tokyo-to (JP)
(72) Inventor: Nakamura, Masakazu, Itabashi-ku Tokyo-to (JP)
(74) Representative: King, James Bertram

(56) References cited:
- DE-A- 2 603 521
- DE-B- 2 717 574
- DE-C- 2 365 652
- GB-A- 1 241 855
- US-A- 1 514 419
- US-A- 4 080 042

## Description

This invention relates to fixed focus binoculars to eliminate the need for setting the focus each time the binoculars are used.

When viewing an object through binoculars a user needs to focus onto the object by adjusting either the ocular or objective lenses.

It is inconvenient to focus the binoculars on each occasion particularly when a snap view is required or when viewing a moving object.

Fixed focus binoculars are known from for example DE-A- 2,603,521 wherein the depth of focus is preset to eliminate the need for focusing on each occasion of use.

However, such fixed focus binoculars involve the problem in that an image cannot be seen clearly in cases both where visual acuity is adjusted to a person with a visual acuity of 1.0 for right and left eyes and in the case of the person who has inferior visual acuity or a superior visual acuity to that mentioned, or in the case of the person who has different visual acuities for right and left eyes. Because there are differences in individual visual acuity a person who does not meet the visual acuity preset in fixed focus binoculars cannot make use of the binoculars to the full extent.

Since the focus of binoculars is determined through the optical distance between objective and ocular lenses, binoculars are constructed so that the optical distance between objective lens and ocular lens can be adjusted by manually sliding either of the lens barrels. One method involves a pin protruding from the ocular lens barrel to engage both a linear guide groove and also a spiral guide groove so that manual rotation of the said spiral groove slides the ocular lens barrel. Methods of setting the focus by sliding the ocular lens barrel using screw means are also known.

It is an object of this invention to provide fixed focus binoculars in which focus can be preset to a user's visual acuity before the binoculars are used.

According to this invention there is provided fixed focus binoculars with a visual acuity compensating mechanism, as defined in Claim 1.

This invention is further described and illustrated with reference to the accompanying drawings showing an embodiment by way of example. In the drawings:
- Figure 1: shows a plan view of fixed focus binoculars which incorporate ocular lens external barrels with a visual acuity compensating mechanism according to this invention,
- Figure 2: shows a cross-section of the visual acuity compensating mechanism in the objective lens side,
- Figure 3: is a cross section on line A-A′, Figure 4 is a cross section of an ocular lens which is compensated by the visual acuity compensating mechanism, and

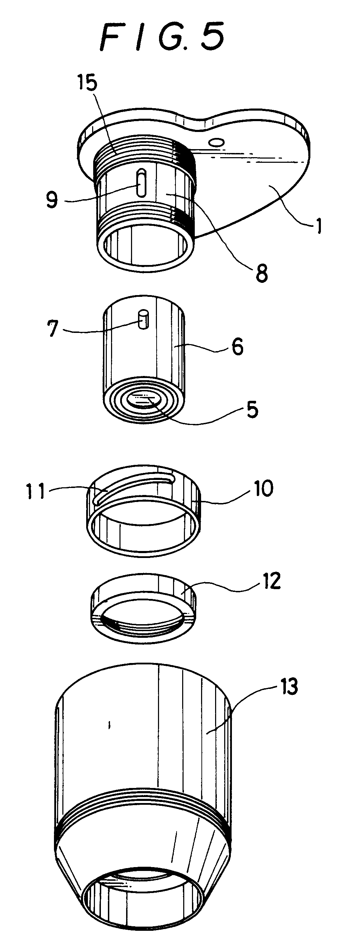

- Figure 5: is an exploded view of the ocular lens barrel, guide barrel, rotary barrel and ocular lens external barrel disassembled to show the visual acuity compensating mechanism.

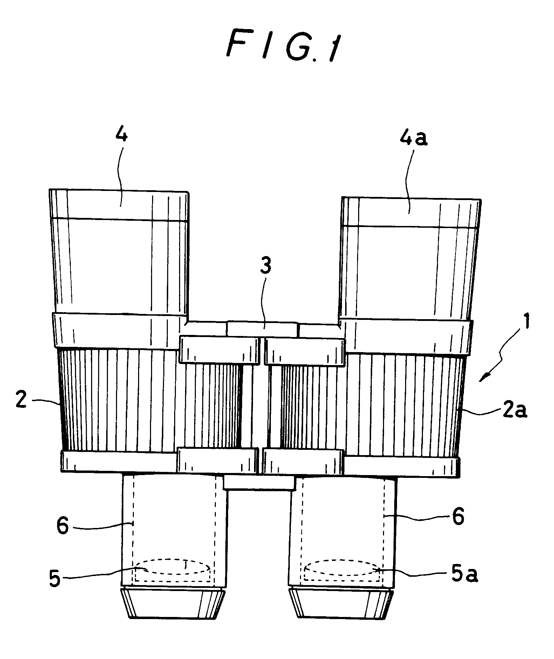

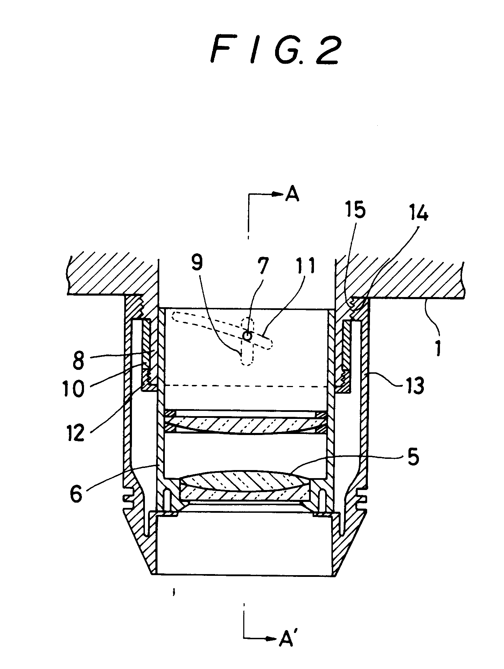

Referring to Figure 1, fixed focus binoculars comprise a main body connecting the right and left barrels 2a and 2 to each other and wherein the width can be varied by opening or closing the right and left barrels by pivoting around the central shaft 3. Objective lenses 4,4a are associated with ocular lenses 5,5a. Figure 2 shows a cross section of the ocular lens 5. (The ocular lens 5a has an identical construction.)

The ocular lens 5 is secured to the ocular barrel 6. A pin 7 protrudes from the ocular lens barrel and the end of this pin 7 extends through guide slot 9 to engage spiral groove 11 provided on a rotating barrel 10. Guide groove 9 is linear and is located on guide barrel 8 which is fixed to the main body 1. The rotary barrel 10 which is fitted externally over the guide barrel 8 can be rotated freely. The ocular lens barrel 6 can slide freely inside the guide barrel 8. A rotary barrel retainer ring 12 is provided with an ocular lens external barrel 13 which is coupled by a screw thread 14, 15 to the main body. The ocular lens external barrel 13 houses the said ocular lens barrel 6, guide barrel 8, rotary barrel 10 and rotary barrel retainer ring 12.

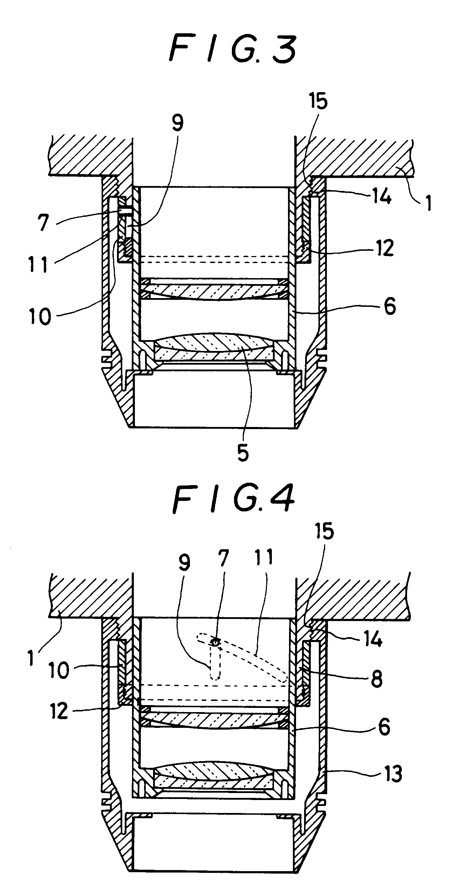

In adjusting the focus of the said visual acuity compensating mechanism screws 14 and 15 of ocular lens external barrel 13 are removed to expose the visual acuity compensating mechanism and a user brings his eye close to the ocular lenses and turns the rotary barrel 10 while viewing an image. When the rotary barrel 10 is turned, the spiral groove 11 is relatively displaced and the ocular lens barrel 6 slides along the guide groove 9 by the action of the pin 7. This is shown in Figure 2 and Figure 4. In Figure 2 the ocular lens barrel 6 (ocular lens 5) is at the normal position (visual acuity being 1.0) while in Figure 4 the ocular lens barrel 6 (ocular lens 5) is in position for visual acuity of 1.5, that is where the optical distance from the objective lens 4 is less than standard. The ocular lens barrel 6 has been moved by slightly turning the rotary barrel 10 leftward. Therefore, if the visual acuity is at 1.5, the rotary barrel 10 is turned in rightward direction to adjust the position of ocular lens barrel 6 (ocular lens 5) in a way that the optical distance from the objective lens 5 may be lengthened.

When first used the said ocular lens 5 is adjusted by removing the ocular lens external barrel, and when the adjustment is completed the ocular lens external barrel 13 is fitted to the main body 1 by the screw threads 14 and 15 to prevent accidental adjustment.

From the above, the problem of compensating for individual differences in visual acuity is effected by changing the optical distance between objective lens 4 and ocular lens 5 in accordance with visual acuity. Another means for achieving this is to adjust the objective lens instead of the ocular lens. The structure for doing this can be identical to the case described for the ocular lens 5.

Although the embodiment uses a spiral groove 11, it is also possible to adjust the optical distance against the objective lens 4 using the screw system by providing threads on the ocular lens barrel 6. However, this method is not especially recommended because there may be a change in the light beam transmission when the ocular lens is turned.

This invention therefore makes it possible to use fixed focus binoculars adapted to a user's visual acuity by adjusting the optical distance between objective lens and ocular lens as described above.

Thus a user can clearly see the subject viewed even at a close distance if the optical distance between objective lens and ocular lens can be adjusted over a wide range.

In addition as the compensating mechanism is incorporated within the ocular lens external barrel inadvertent changes are avoided.

## Claims

1. Fixed focus binoculars with a main body (1) and a visual acuity compensating mechanism (7,8,9,10,11), characterised in that said mechanism (7,8,9,10,11) is presettable with a slidable lens mount (6) having a pin (7) engaging a guide groove (11) in a barrel (10) which is rotatably mounted on the main body (1), the main body (1) having a slot (9) through which the pin (7) passes, the end of said pin (7) engaging the guide groove (11) which is arcuate, the rotation of the barrel (10) thereby causing the lens mount (6) to slide within the main body (1).

2. Fixed focus binoculars according to Claim 1, characterised by an external cover barrel (13) which encloses the mechanism (7,8,9,10,11) and lens mount (6) to prevent accidental adjustment once preset.

3. Fixed focus binoculars according to Claim 1 or 2, wherein the lens mount (6) houses either an ocular lens (5) or an objective lens (4).

## Patentansprüche

1. Fernglas mit Doppelokular und fester Brennweite, mit einem Hauptkörper (1) und einer Vorrichtung (7, 8, 9, 10, 11) zur Anpassung an die Sehschärfe des Benutzers, **dadurch gekennzeichnet**, **daß** die Vorrichtung (7, 8, 9, 10, 11) über einen verschieblichen Linsenträger (6) voreinstellbar ist, der einen in eine Führungsnut (11) in einer Hülse (10) eingreifenden Stift (7) aufweist, daß die Hülse (10) am Hauptkörper (1) verdrehbar angeordnet ist, und daß der Hauptkörper (1) einen Schlitz (9) aufweist, durch den der Stift (7) geführt ist, dessen Ende in eine gekrümmte Führungsnut (11) eingreift, derart, daß bei Verdrehen der Hülse (10) der Linsenträger (6) in dem Hauptkörper (1) verschieblich ist.

2. Fernglas nach Anspruch 1, **dadurch gekennzeichnet, daß** eine äußere Abdeckhülse (13) die Vorrichtung (7, 8, 9, 10, 11) zur Anpassung und den Linsenträger (6) gegen ungewollte Verstellung sichernd umschließt.

3. Fernglas nach Anspruch 1 oder 2, **dadurch gekennzeichnet, daß** Linsenträger (6) entweder eine Okularlinse (5) oder eine Objektivlinse (4) aufnimmt.

## Revendications

1. Jumelles à foyer fixe comportant un corps principal (1) et un mécanisme de compensation d'acuité visuelle (7, 8, 9, 10, 11), caractérisées en ce que ledit mécanisme (7, 8, 9, 10, 11) est préréglable à l'aide d'une monture de lentille coulissante (6) munie d'une broche (7) qui vient en prise avec une gorge de guidage (11) prévue dans un cylindre (10) monté mobile en rotation sur le corps principal (1), corps principal (1) qui possède une lente (9) à travers laquelle la broche (7) passe, l'extrémité de ladite broche (7) venant en prise avec la gorge de guidage (11) qui est arquée, et la rotation du cylindre (10) obligeant ainsi la monture de lentille (6) à coulisser à l'intérieur du corps principal (1).

2. Jumelles à foyer fixe selon la revendication 1, caractérisées par un cylindre de recouvrement extérieur (13) qui renferme le mécanisme (7, 8, 9, 10, 11) et la monture de lentille (6) pour empêcher un ajustement accidentel une fois le préréglage effectué.

3. Jumelles à foyer fixe selon la revendication 1 ou 2, dans lesquelles la monture de lentille (6) loge soit une lentille d'oculaire (5) soit une lentille d'objectif (4).
